(19) Europäisches Patentamt
European Patent Office
Office européen des brevets

(11) **EP 2 861 110 B1**

(12) **FASCICULE DE BREVET EUROPEEN**

(45) Date de publication et mention
de la délivrance du brevet:
**19.09.2018 Bulletin 2018/38**

(21) Numéro de dépôt: **13731416.7**

(22) Date de dépôt: **12.06.2013**

(51) Int Cl.:
***A47J 37/06*** *(2006.01)*

(86) Numéro de dépôt international:
**PCT/FR2013/051365**

(87) Numéro de publication internationale:
**WO 2013/186487 (19.12.2013 Gazette 2013/51)**

(54) **APPAREIL DE CUISSON ET SON PROCEDE DE MISE EN OEUVRE**

KOCHVORRICHTUNG UND VERFAHREN ZUR IMPLEMENTIERUNG DAVON

COOKING APPLIANCE AND METHOD FOR IMPLEMENTING SAME

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.06.2012 FR 1255600**

(43) Date de publication de la demande:
**22.04.2015 Bulletin 2015/17**

(73) Titulaire: **SEB S.A.**
**69130 Ecully (FR)**

(72) Inventeurs:
• **VOLATIER, Sébastien**
**21000 Dijon (FR)**
• **LECERF, Joël**
**50190 Periers (FR)**

(74) Mandataire: **Regimbeau**
**20, rue de Chazelles**
**75847 Paris Cedex 17 (FR)**

(56) Documents cités:
WO-A1-2007/140547    AU-A1- 2009 201 010
DE-A1- 4 302 190    US-A1- 2010 116 146

## Description

L'invention concerne un appareil de cuisson pour cuire un aliment et son procédé de mise en oeuvre.

## 1. Domaine de l'invention

La présente invention concerne le domaine des appareils de cuisson comprenant au moins une plaque chauffante pour cuire un aliment tel que, viande, poisson, légume ou autres. Plus précisément, l'invention concerne un appareil de cuisson permettant de déterminer l'épaisseur des aliments contenus dans l'appareil.

## 2. Art antérieur

Un appareil de cuisson d'aliment de ce type est connu du document DE 4 302 190. Ce dernier décrit un appareil de cuisson comprenant une première structure comportant une plaque chauffante pour cuire un aliment et un dispositif de mesure pour mesurer l'épaisseur de l'aliment dans l'appareil. Le dispositif de mesure est équipé de deux balanciers pivotants, liés chacun par une première extrémité à un arbre pouvant pivoter. Le dispositif de mesure comprend également un moyen de mesure de l'angle de pivotement du balancier pour estimer l'épaisseur de l'aliment.

Cependant, cet appareil ne permet pas d'estimer de manière très fiable l'épaisseur de l'aliment et n'est pas facile d'utilisation.

## 3. Objectifs de l'invention

L'invention a notamment pour objectif de pallier tout ou partie des inconvénients de l'art antérieur.

Plus précisément, un objectif de l'invention est de fournir un appareil de cuisson permettant de déterminer l'épaisseur des aliments afin de contrôler et obtenir une cuisson automatique des aliments.

L'invention a encore pour but de garantir la qualité de l'aliment, notamment organoleptique puisque le temps de cuisson dépendra, entre autre, de l'épaisseur.

## 4. Résumé de l'invention

Ces objectifs sont atteints à l'aide d'un appareil de cuisson tel que décrit par l'objet de la revendication 1.

Ainsi, la deuxième structure mobile permet une adaptabilité de l'appareil à l'épaisseur de l'aliment, et la distance existant alors entre les deux structures permet de déterminer de manière très fiable l'épaisseur de l'aliment. De préférence, la première structure cuira contre elle l'aliment.

Selon une caractéristique importante, la deuxième structure comprend une plaque chauffante adaptée à cuire contre elle par conduction ledit aliment disposé entre les plaques.

De la sorte, l'aliment peut être cuit uniformément et plus rapidement puisque les deux côtés de l'aliment sont en contact avec les plaques chauffantes.

Selon un mode de réalisation, le balancier est lié rigidement à l'arbre pouvant pivoter ou est monté sur l'arbre avec un jeu suffisant pour permettre le pivotement du balancier autour de l'arbre. Tous les cas de figures pour faire pivoter le balancier sont envisagés de sorte que le montage soit simple.

De manière avantageuse, la deuxième structure est montée sur l'arbre au moyen de bras latéraux mobiles par rapport au moins à la première structure.

Cet agencement permet de faciliter le montage et un gain de temps dans la fabrication.

De manière préférée, chaque bras latéral comprend une première extrémité liée à l'arbre et une seconde portion liée à un flanc de la deuxième structure vers le milieu de celui-ci.

Le bras ainsi agencé permet une mesure moyenne de l'aliment et la gestion des défauts de parallélisme entre les deux structures.

Selon une autre caractéristique importante, le balancier comporte une première extrémité engagée avec une première extrémité d'un des bras latéraux où le bras est lié à l'arbre, cet engagement opérant jusqu'à un angle prédéterminé de pivotement des bras au-delà duquel ledit bras se désengage du balancier, de sorte que les bras latéraux poursuivent ensuite leur pivotement sans que celui du balancier ne se poursuive.

Cet agencement d'une part, permet d'augmenter la résolution des mesures sur une plage correspondant approximativement à une épaisseur d'aliment, et d'autre part, permet à la deuxième structure de s'ouvrir sans que le moyen de mesure ne soit sollicité continuellement.

Avantageusement, l'angle de pivotement prédéterminé des bras correspond à l'angle de pivotement prédéterminé du balancier qui est compris entre 10° et 30°.

Selon encore une autre caractéristique avantageuse, l'angle de pivotement prédéterminé du balancier correspond à un état d'ouverture intermédiaire des première et deuxième structures où elles sont sensiblement parallèles.

Selon une caractéristique importante, le balancier est lié, vers sa deuxième extrémité, à un moyen pour actionner le moyen de mesure. Cet agencement permet au balancier d'actionner aisément le moyen de mesure, ce qui donne une image de l'angle parcouru au niveau du bras et de ce fait une information précise sur l'écartement des structures et donc de l'épaisseur de l'aliment.

Selon un mode de réalisation préféré, le moyen de mesure comprend un potentiomètre.

L'utilisation d'un potentiomètre est une solution simple, très économique et facile à monter.

Avantageusement, le balancier comprend un premier et un deuxième doigts, le moyen d'actionnement pour actionner le moyen de mesure forme un levier mu par le deuxième doigt et sollicité par un moyen de rappel qui maintient en contact le balancier et le levier pendant le mouvement d'écartement de la deuxième structure. L'utilisation d'un levier permet au balancier d'entraîner le moyen de mesure dès l'ouverture de la deuxième structure. De plus, le moyen de rappel permet de réduire les jeux de construction.

Selon un autre mode de réalisation, le moyen d'actionnement comprend une roue dentée mue par une crémaillère du balancier et sollicité par un moyen de rappel qui maintient en contact le balancier et la roue dentée pendant le mouvement d'écartement de la deuxième structure.

Selon un autre mode de réalisation, le moyen de mesure comprend une jauge de déformation. L'utilisation d'une jauge de déformation est une solution également simple et applicable à l'appareil tel que susmentionné et ne nécessitant pas sa modification.

Selon encore un autre mode de réalisation et par souci de simplicité, le moyen de mesure comprend un système de détection optique à photo-détecteur.

L'invention concerne également un procédé de mise en oeuvre d'un appareil de cuisson d'un aliment. Ce procédé comprend une étape d'ajustage de l'appareil, avant utilisation, via la sélection par un utilisateur d'une touche ou d'une combinaison de touches que comprend l'appareil.

Ainsi, l'ensemble des erreurs et incertitudes dû à l'utilisation répétée et à l'usure des pièces est compensé.

## 3. Liste des figures

D'autres caractéristiques et avantages de l'invention ressortiront clairement de la description qui en est faite ci-après, à titre indicatif et nullement limitatif, en référence aux dessins annexés, dans lesquels :

- la figure 1 est une vue en perspective de l'appareil de cuisson selon l'invention ;
- la figure 2 est une vue éclatée de l'appareil selon l'invention ;
- la figure 3 est une vue de côté de l'appareil ouvert ;
- la figure 4 est une vue de détails du dispositif de mesure monté sur l'appareil selon la figure 2 ;
- la figure 5 est une vue de côté de l'appareil fermé ;
- la figure 6 est une vue de détails du dispositif de mesure monté sur l'appareil selon la figure 4 ;
- la figure 7 représente une vue interne d'un bras de l'appareil ;
- la figure 8 est une vue de côté du balancier ;
- la figure 9 représente une vue en perspective de l'appareil selon un autre mode de réalisation ;
- les figures 10A, 10B et 11 sont des représentations schématiques d'autres modes de réalisation du dispositif de mesure selon l'invention ;
- la figure 12 montre de façon plus détaillée le dispositif de mesure selon l'invention ;
- les figures 13 et 14 représentent les moyens d'engagement du balancier et du bras ;
- la figure 15 illustre une variante du balancier ;
- la figure 16 est une vue de détails d'une partie du potentiomètre ;
- la figure 17 est une vue en perspective d'une autre variante du potentiomètre selon la figure 16 ;
- la figure 18 est une vue de détails d'un autre mode de réalisation du moyen de mesure ;
- la figure 19 illustre une partie du potentiomètre.

## 4. Description détaillée

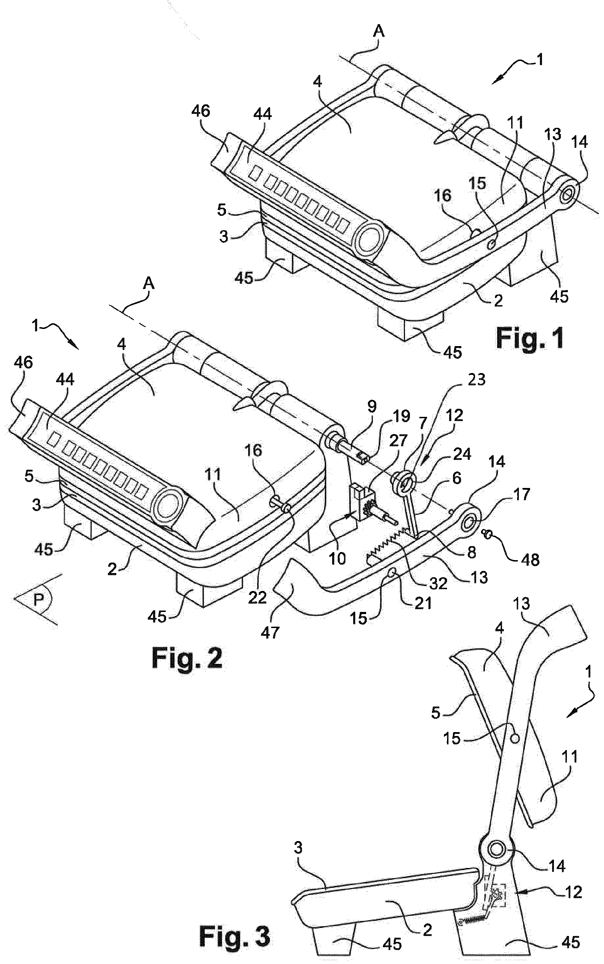

La figure 1 illustre un appareil ménagé 1 comprenant une première structure 2 laquelle comporte une plaque chauffante 3, inférieure, pour cuire un aliment et un dispositif de mesure 12 pour mesurer l'épaisseur de l'aliment placé dans l'appareil 1.

L'aliment ou les aliments peuvent être de la viande, du poisson, des légumes, ou autres.

Le dispositif de mesure 12 représenté sur les figures 2 à 6, 8, et 10A, 10B à 19 comprend un balancier 6 apte à pivoter dans l'appareil 1. Le balancier 6 présente une première 7 et deuxième 8 extrémités, la première 7 étant liée à un arbre 9 pouvant pivoter selon un axe de rotation A.

Le balancier 6 peut être lié rigidement à l'arbre 9, en étant par exemple monté serré autour de lui. De la sorte, lors de le pivotement ou rotation de l'arbre 9, celui-ci entraîne également en rotation le balancier 6. On peut aussi prévoir que le balancier 6 soit monté sur l'arbre 9 avec un jeu suffisant pour permettre la rotation ou pivotement du balancier. A la différence de la variante avec le balancier monté rigidement, lors de la rotation de l'arbre 9, le balancier pivote via d'autres moyens liés à l'arbre 9 qui sont décrits plus loin dans la description.

Le dispositif de mesure 12 comprend également un moyen de mesure 10 de l'angle de pivotement du balancier 6 permettant d'estimer l'épaisseur de l'aliment lequel est décrit ci-après.

On prévoit que l'appareil 1 soit pourvu d'une deuxième structure 4 mobile par rapport à la première structure 2 pour produire un mouvement d'écartement

La deuxième structure 4 comprend également une plaque chauffante 5, supérieure, qui est adaptée à cuire contre elle, par conduction, l'aliment ou les aliments disposés entre les plaques chauffantes inférieure 3 et supérieure 5. Plus précisément, l'aliment est cuit contre les deux plaques chauffantes 3, 5.

Dans une variante, il est envisageable que la deuxième structure 4 soit constituée d'un couvercle par exemple, pour recouvrir la première structure 2.

Chaque structure 2, 4 est formée par exemple d'une coque et comprend des flancs 11 latéraux. La coque peut être en métal ou polymère par exemple. La deuxième structure 4 peut comprendre sur sa coque une poignée 46, de préférence en thermoplastique et isolante pour permettre l'ouverture et la fermeture de l'appareil 1. La première structure 2 peut comprendre des pieds 45 pour le positionnement de l'appareil 1 sur un support plat, par exemple. Les pieds 45 peuvent être formés par moulage avec la coque de la deuxième structure 4 ou être fixés sur la coque avec des vis, ou autres moyens adéquats. Le pied 45 est recouvert par une paroi 56. Un bac de récupération 53 de jus de cuisson peut également être prévu.

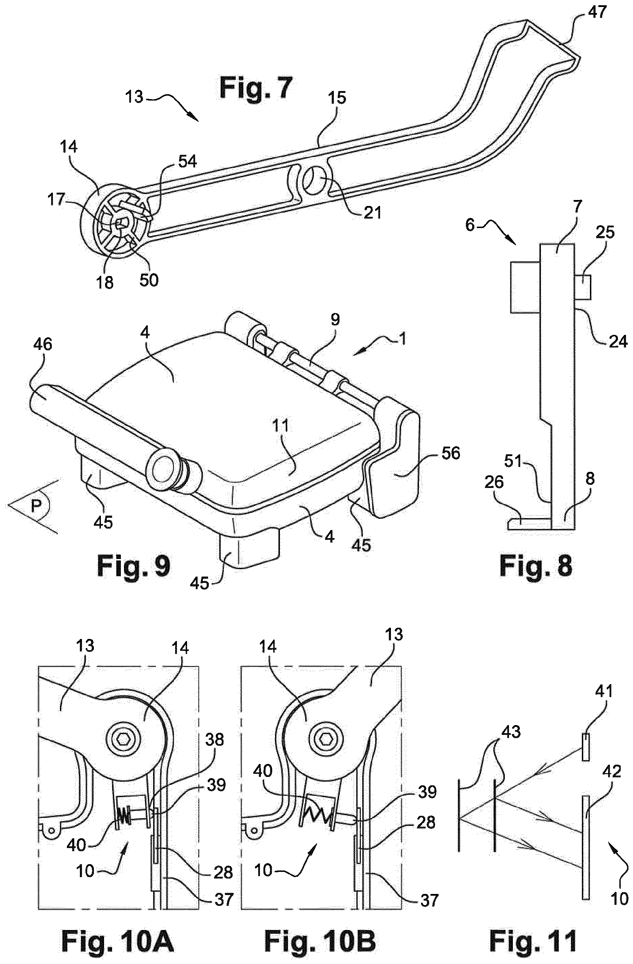

Les première 2 et deuxième 4 structures présentent un état de fermeture dans lequel elles s'étendent chacune suivant un plan P sensiblement horizontal et parallèle l'une par rapport à l'autre, et un état d'ouverture dans lequel elles forment, par exemple, sensiblement un dièdre avec un angle d'écartement d'environ 100° (lorsque la deuxième structure 4 est fixée rigidement à l'arbre 9, figure 9). L'aliment à cuire sera ainsi disposé horizontalement entre les plaques chauffantes inférieure 3 et supérieure 5.

Chaque plaque chauffante 3, 5 est chauffée par une résistance électrique (non représentée) leur fournissant l'énergie nécessaire pour cuire l'aliment. La résistance électrique se trouve en général entre la coque et les plaques chauffantes 3, 5. Les plaques chauffantes 3, 5 sont de préférence amovibles et peuvent être recouvertes d'un revêtement antiadhésif.

Selon l'invention, le mouvement d'écartement de la deuxième structure 4 par rapport à la première structure 2 génère une rotation de l'arbre 9 par rapport à la première structure 2, ce qui entraîne le pivotement du balancier 6. Dans le cas de la fixation rigide du balancier 6 sur l'arbre 9, le pivotement de l'arbre 9 entraîne le pivotement du balancier 6. Le moyen de mesure 10 interagit avec le balancier vers la deuxième extrémité 8 du balancier 6.

La deuxième structure 4 peut être montée sur l'arbre 9 au moyen de bras latéraux 13 (figure 7) mobiles par rapport, au moins, à la première structure 2. Plus précisément, chaque bras latéral 13 comprend une première extrémité 14 liée à l'arbre 9 et une seconde portion 15 liée vers le milieu 16 d'un flanc 11 de la deuxième structure 4. La seconde portion 15 peut être formée par une deuxième extrémité 47 du bras 13. Dans ce présent mode de réalisation, cette deuxième extrémité 47 est solidarisée à la poignée 46.

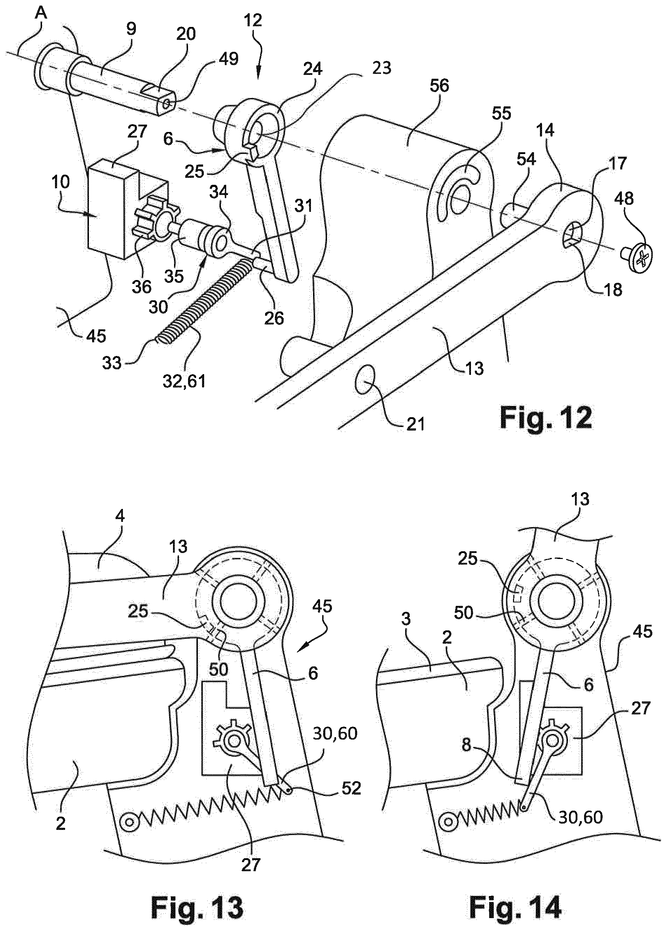

Plus précisément, la première extrémité 14 des bras latéraux 13, comme on peut le voir sur la figure 12, comporte une ouverture 17 dont la surface interne est munie de méplats 18, ici deux méplats, destinés à coopérer avec l'extrémité 19 de l'arbre 9 laquelle comporte également un méplat 20 afin de créer une liaison fixe entre l'arbre 9 et les bras 13. L'ensemble peut être serré encore par une vis 48 via l'ouverture 17 du bras 13 et une ouverture 49. Pour faciliter le guidage du bras, la paroi 56 recouvrant le pied 45 peut présenter une gorge 55 dans laquelle coulisse un pion 54. La seconde portion 15 des bras 13 comporte une ouverture 21 pour le passage d'une vis 22 par exemple qui sera vissée au milieu 16 du flanc 11 de la deuxième structure 4. Celle-ci peut être fixe par rapport au bras 13 ou de préférence mobile en rotation via une liaison pivot créée par la vis 22 et l'ouverture 21. Une liaison pivot permettra un ajustement de la deuxième structure 4 de manière sensiblement parallèle à la première 2 de sorte que la cuisson de l'aliment soit uniforme. Toutefois, la mobilité de la deuxième structure 4 par rapport au bras 13 peut être bloquée grâce un organe femelle, du type tourillon, monté sur la coque de la structure 4 coopérant avec un organe mâle, de type encoche, prévu sur la face interne du bras 13, propre à définir une liaison par obstacle.

Dans une variante de l'appareil 1 schématisé sur la figure 9, il est envisageable que celui-ci soit dépourvu de bras 13. Dans ce cas, c'est le mouvement de la deuxième structure 4 qui est montée de manière serrée et rigide avec l'arbre 9 qui entraîne le pivotement du balancier 6.

Comme vu précédemment, le balancier 6 peut être lié rigidement à l'arbre 9. Pour cela, la première extrémité 7 du balancier 6 comporte un orifice 23 dont la surface interne peut être munie d'un méplat (non représenté) venant en regard du méplat 20 de l'arbre 9 pour créer une liaison fixe. Toutefois, le balancier 6 peut être monté de manière serrée via la fixation du bras 13 sur l'arbre 9. De la sorte en faisant pivoter les bras latéraux 13 et/ou la deuxième structure 4 pour ouvrir l'appareil 1, l'arbre 9 est entraîné en rotation, ce qui entraîne simultanément le balancier 6 en mouvement.

Le balancier 6 présente une longueur d'environ 100 mm. Celui-ci peut être constitué de plastique, métal, ou autre matériau par exemple.

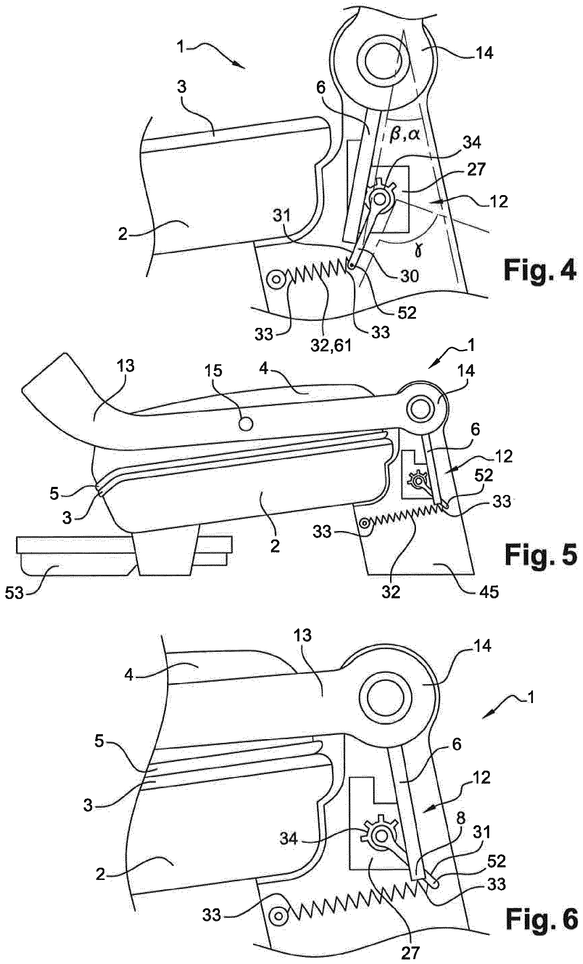

La première extrémité 7 du balancier 6 peut être engagée avec la première extrémité 14 d'un des bras 13 latéraux où le balancier 6 est lié à l'arbre. L'engagement entre le balancier 6 et le bras 13 est obtenu à l'aide d'un premier doigt 25 situé sur la face externe 24 de la première extrémité 7 du balancier 6. Le premier doigt 25 permet à une portion arrière 50 du bras 13 d'être en appui sur lui pendant le déplacement du bras 13. Par exemple, cet engagement opère jusqu'à un angle de pivotement a prédéterminé du bras 13 (voir figure 4), ce dernier se désengageant du balancier 6 au-delà dudit angle prédéterminé a, de sorte que les bras 13 latéraux poursuivent ensuite leur pivotement, vers une position totalement ouverte des bras 13 et/ou des première 2 et deuxième structures 4, et sans que le pivotement du balancier 6 ne se poursuive.

Dans le cas du balancier 6 monté avec un jeu sur l'arbre 9, ce dernier est monté de manière rigide avec le bras 13. En particulier, le montage est réalisé au moyen du méplat 20 de l'arbre 9 coopérant avec le méplat 18 de la surface interne de l'ouverture 17 du bras 13. Le pion 54 prévu sur le bras 13 est avantageusement destiné à venir en contact avec le premier doigt 25 que comprend le balancier 6. En faisant pivoter le bras 13, le pion 54 vient en butée contre le premier doigt 25 entraînant ainsi la rotation du balancier 6. Pour que les bras 13 et/ou des première 2 et deuxième structures 4 poursuivent leurs pivotement vers la position totalement ouverte, on peut prévoir que le pion 54 soit constitué d'une lame flexible. Cette dernière permettrait le désengagement du bras 13 du balancier 6 au-delà de l'angle de pivotement a prédéterminé du bras. D'autres solutions sont bien entendu envisageables pour que le désengagement du bras 13 et du balancier 6 soit effectué.

L'angle de pivotement a prédéterminé du bras 13 correspond à un angle de pivotement β prédéterminé du balancier 6 qui est compris entre 10 et 30° (illustré figure 4). De préférence, l'angle de pivotement β prédéterminé du balancier 6 est de l'ordre de 24°. Plus précisément, l'angle de pivotement β prédéterminé du balancier 6 correspond à un état d'ouverture intermédiaire des première 2 et deuxième 4 structures, et/ou des bras 13, où l'écartement desdites structures 2, 4 sont sensiblement parallèles. L'état d'ouverture intermédiaire des première 2 et deuxième 4 structures présente alors un écartement compris entre 30 et 60 mm. De préférence, cet écartement est de 40 mm.

Le balancier 6 comprend sur sa deuxième extrémité 8 un moyen pour interagir avec le moyen de mesure.

Plus précisément, la deuxième extrémité 8 du balancier 6 peut comprendre sur sa face interne 51 un deuxième doigt 26 destiné opérer une liaison entre le balancier 6 et un moyen d'actionnement 60 pour actionner le moyen de mesure 10.

Le moyen de mesure 10 peut comprendre par exemple, un potentiomètre 27, une jauge de déformation, un système 29 de détection optique à photo-détecteur ou un système de détection électromagnétique. Le moyen de mesure 10 est installé de préférence dans un des pieds 45 arrières pour éviter les variations de températures.

Dans le mode de réalisation comprenant le potentiomètre 27, celui-ci comporte un corps 59 et une cavité 36 débouchant à l'intérieur du corps 59. Le potentiomètre 27 comporte également un levier 30 mu par le deuxième doigt 26 du balancier 6, entre l'état de fermeture et d'ouverture intermédiaire des première 2 et deuxième structures 4.

Avantageusement, le moyen de mesure 10 comprend également un moyen de rappel 32.

En particulier, le levier 30 présente une extrémité distale 31 pouvant être sollicitée par le moyen de rappel 32 qui maintient en contact le balancier 6 et le levier 30, au niveau du deuxième doigt 26, pendant le mouvement d'écartement de la deuxième structure 4 par exemple, ou du mouvement des bras 13. Le moyen de rappel 32 peut être fixé par une de ses extrémités 33 au bâti de l'appareil 1 et l'autre de ses extrémités 33 à un passage 52 que peut comprendre l'extrémité distale 31 du levier 30.

Le levier 30 comporte également une extrémité proximale 34 munie d'une tête 35 qui est destinée à s'engager dans la cavité 36 du potentiomètre 27. Le levier 30 est mobile en rotation suivant un angle ? compris entre 0° et 65°. Le levier peut comporter une longueur d'environ 20 mm.

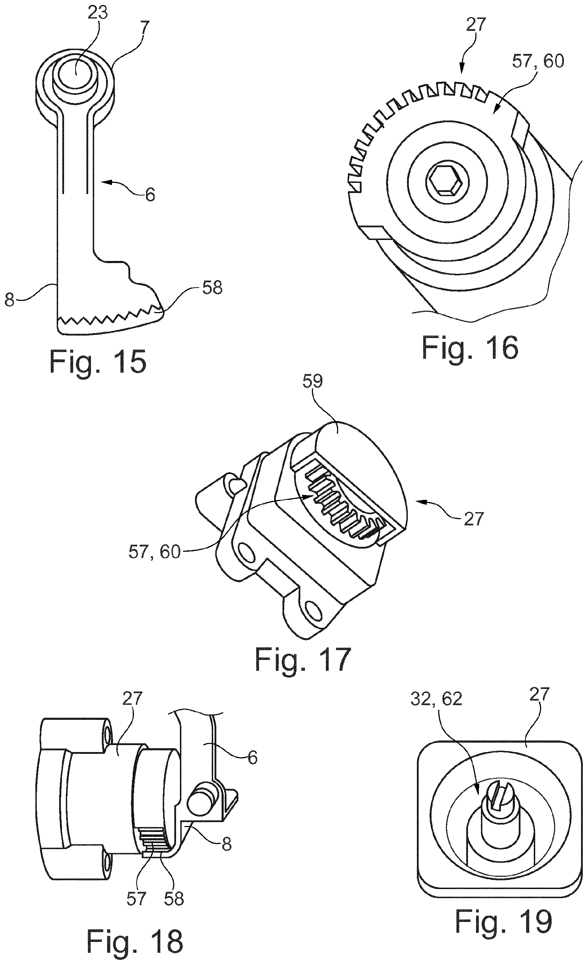

Selon une autre variante de ce mode de réalisation telle qu'illustrée sur les figures 15 à 19, le moyen de mesure 10 comprend le potentiomètre 27. Celui-ci comporte une roue dentée 57 installée à l'intérieur du corps 59 du potentiomètre 27. Toutefois, une portion de la roue dentée 57 reste accessible hors du corps 59. Plus précisément, la roue dentée 57 est mue par une crémaillère 58 que comprend l'extrémité 8 du balancier 6. Les dents de la roue peuvent être disposées sur toute ou partie de la périphérie de celle-ci. Le moyen de rappel 32 peut être logé à l'intérieur du corps 59 du potentiomètre pour maintenir en contact le balancier 6 et le levier 30 pendant le mouvement d'écartement de la deuxième structure 2.

Le moyen de rappel 32 peut comprendre un premier élément 61 et deuxième éléments 62 de rappel. Le premier élément de rappel 61 peut être est logé dans le moyen de mesure 10, par exemple dans le corps 59 du potentiomètre 27 et/ou le deuxième élément de rappel 62 peut être fixé d'une part au bâti et d'autre part à l'extrémité distale 31 du levier 30.

Ce moyen de rappel 32 permet de rappeler le balancier 6 lorsqu'il est libéré à l'ouverture complète de l'appareil 1 et de pallier au problème de jeu lié à la fabrication. Ils sont de préférence, un ressort de traction et/ou un ressort spiral.

Le potentiomètre 27 peut être utilisé de manière non limitative. Il peut présenter une plage angulaire variant de 0 à 90°, de 0 à 120° ou encore de 0 à 360°. On peut prévoir que le potentiomètre 27 soit doté d'un circuit imprimé intégré, accolé ou décalé.

Dans le mode de réalisation comprenant la jauge de déformation 28 illustré sur les figures 10A et 10B, celle-ci est disposée, par exemple sur une paroi 37 du pied 45 arrière. La deuxième extrémité 8 du balancier 6 comporte un logement avec une ouverture 38 dans lequel est logé un pointeau 39 traversant l'ouverture 38 lors du pivotement du balancier 6. Le pointeau 39 est monté sur un ressort 40 et agit sur la jauge de déformation 28.

Sur la figure 11 est représenté schématiquement un exemple de système 29 de détection optique à photo-détecteur comprenant une LED 41 et un photo-détecteur 42 disposés par exemple à distance sur le bâti, à l'intérieur du pied 45. Un élément réfléchissant 43 peut être monté sur la deuxième extrémité 8 du balancier 6 pour réfléchir le rayon lumineux vers le photo-détecteur 42, ce qui permet ainsi d'estimer l'épaisseur de l'aliment.

Concernant les éléments électromagnétiques prévus pour le moyen de mesure, ceux-ci peuvent par exemple être constitués d'un capteur à effet Hall.

Grâce à l'agencement du dispositif de mesure 12, on pourrait établir un rapport d'amplification de l'angle de pivotement β balancier (ou de l'angle du bras latéral 13) supérieur à 3 pour permettre de différencier des épaisseurs d'aliment à +/-1 mm. Ce rapport peut s'écrire de la sorte :

$$R_{amplification} = \frac{L_{balancier}}{L_{levier}} = \frac{\beta_{levier}}{\alpha_{balancier}} > 3$$

Afin d'optimiser les résultats atteints de sorte qu'ils soient précis et pour une meilleur cuisson de l'aliment, on peut prévoir un étalonnage ou calibration de l'appareil 1 en usine, après fabrication. Pour plus de précision, l'étalonnage consiste à mesurer la même grandeur avec l'appareil avec des cales étalons.

Par exemple, une première cale étalon destinée à simuler une épaisseur d'aliment peut être installée entre les première 2 et deuxième 4 structures de sorte à obtenir une première valeur, dite premier point. La première cale peut présenter une épaisseur d'environ 2 mm.

Une deuxième cale étalon est ensuite disposée entre les première 2 et deuxième 4 structures afin d'obtenir une deuxième valeur, dite deuxième point. La deuxième cale peut présenter une épaisseur d'environ 30 mm.

Ces premier et deuxième points permettront de déterminer, via différentes simulations, les incertitudes liées aux mesures effectuées par l'appareil 1 pendant l'étalonnage et bien entendu de les corriger.

Lorsque l'appareil est vendu et prêt à fonctionner, un utilisateur peut l'utiliser de la sorte :

- Mise sous tension de l'appareil 1 en appuyant, par exemple, sur une touche ou bouton marche/arrêt d'une interface 44 que présente l'appareil 1. Celui-ci peut être par exemple mis sous tension, en branchant un cordon d'alimentation qu'il comprend afin de se connecter sur le secteur.
- Si cela est prévu, sélection du type d'aliment au moyen de l'interface 44.
- Si cela est encore prévu, sélection d'un degré de cuisson souhaité de l'aliment. Autrement on peut prévoir une détermination des températures de cuisson en fonction de l'aliment par l'appareil 1.
- Si cela est encore prévu, détermination automatique de la température de préchauffage de l'appareil 1.
- Ouverture de l'appareil. Cette étape peut être réalisée à n'importe quel moment des étapes susmentionnées.
- Mise en place de l'aliment.
- Fermeture de l'appareil 1 en abaissant la deuxième structure 4 et/ou les bras latéraux 13 au-dessus de l'aliment.

Cette étape permettra à l'appareil 1 d'effectuer les mesures d'épaisseur de l'aliment disposé alors entre les première 2 et deuxième 4 structures, et permettra, par exemple, d'activer le début de cuisson de l'aliment. Ladite mesure d'épaisseur est obtenue automatique par l'angle de pivotement β du balancier 6. Ce dernier permet de déterminer l'écartement entre les première 2 et deuxième 4 structures afin d'estimer l'épaisseur de l'aliment.

- A l'issu de la cuisson de l'aliment, l'utilisateur peut retirer l'aliment ou le laissant au chaud entre les structures 2, 4.
- L'appareil peut être mis hors tension en sélectionnant la touche marche/arrêt ou être débranché.

L'interface 44 peut présenter différentes touches ou boutons permettant d'accéder à un menu ou un écran tactile.

Pour s'assurer que le système mécanique et/ou électronique de l'appareil 1 fonctionne de manière optimale et pour compenser l'ensemble des erreurs et incertitudes intervenant après plusieurs utilisations et/ou le vieillissement de l'appareil 1, on peut prévoir que l'utilisateur fasse un ajustage automatique de l'appareil 1. Cet ajustage est réalisé de préférence gril fermé. Il est destiné à ramener le dispositif de mesure 12 à un état de fonctionnement convenant à son utilisation. Par exemple, dans le cas du gril fermé, on ramène le dispositif à 0, valeur indiquant qu'il n'a pas d'épaisseur d'aliments dans l'appareil 1.

L'utilisateur peut par exemple appuyer, avant utilisation, sur une touche d'ajustage ou opérer une combinaison de touches pour obtenir l'ajustage.

**Revendications**

1. Appareil (1) de cuisson comprenant :

     - une première structure (2) comportant une plaque chauffante (3) pour cuire un aliment; et,
     - d'une deuxième structure (4) mobile par rapport à la première structure (2) pour produire un mouvement d'écartement, le mouvement d'écartement de la deuxième structure entraine le pivotement d'un arbre (9) pouvant pivoter par rapport à la première structure (2),

     **caractérisé en ce qu'**il comprend :

     un dispositif de mesure (12) pour mesurer l'épaisseur de l'aliment ainsi disposé, le dispositif de mesure comprenant :

         ▪ un balancier (6) apte à pivoter dans l'appareil, le balancier comprenant une première extrémité (7) et une deuxième extrémité (8) opposée suivant sa longueur, le balancier (6) étant lié par la première extrémité (7) audit arbre (9) ; et,
         ▪ un moyen de mesure (10) de l'angle de pivotement du balancier (6) pour estimer l'épaisseur de l'aliment; le moyen de mesure interagissant avec le balancier (6) vers la deuxième extrémité du balancier (6)

ledit mouvement d'écartement de la deuxième structure par rapport à la première structure (2), entraînant le pivotement du balancier (6).

2. Appareil (1) selon la revendication 1, **caractérisé en ce que** la deuxième structure (4) comprend une plaque chauffante (5) adaptée à cuire contre elle par conduction ledit aliment disposé entre les plaques (3, 5).

3. Appareil (1) selon la revendication 1, **caractérisé en ce que** le balancier (6) est lié rigidement à l'arbre (9) pouvant pivoter.

4. Appareil (1) selon la revendication 1, **caractérisé en ce que** le balancier (6) est monté sur l'arbre (9) avec un jeu suffisant pour permettre le pivotement du balancier (6) .

5. Appareil (1) selon la revendication 1 ou 2, **caractérisé en ce que** la deuxième structure (4) est montée sur l'arbre (9) au moyen de bras (13) latéraux mobiles par rapport au moins à la première structure (2).

6. Appareil (1) selon la revendication 5, **caractérisé en ce que** chaque bras (13) latéral comprend une première extrémité (14) liée à l'arbre (9) et une seconde portion (15) liée à un flanc (11) de la deuxième structure (4) vers le milieu (16) dudit flanc (11).

7. Appareil (1) selon la revendication 5, **caractérisé en ce que** la première extrémité (7) du balancier (6) est engagée avec une première extrémité (14) d'un des bras (13) latéraux où le bras (13) est lié à l'arbre (9), cet engagement opérant jusqu'à un angle prédéterminé de pivotement des bras (13) au-delà duquel ledit bras (13) se désengage du balancier (6), de sorte que les bras (13) latéraux poursuivent ensuite leur pivotement sans que celui du balancier (6) ne se poursuive.

8. Appareil (1) selon la revendication 7, **caractérisé en ce que** l'angle de pivotement prédéterminé des bras (13) correspond à l'angle de pivotement (β) prédéterminé du balancier (6) qui est compris entre 10 et 30°.

9. Appareil (1) selon la revendication 7 ou 8, **caractérisé en ce que** l'angle de pivotement (β) prédéterminé du balancier (6) correspond à un état d'ouverture intermédiaire des première (2) et deuxième structures (4) où elles sont sensiblement parallèles.

10. Appareil (1) selon l'une des revendications 1 à 9, **caractérisé en ce que** le balancier (6) est lié, vers sa deuxième extrémité (8), à un moyen d'actionnement (60) pour actionner le moyen de mesure (10).

11. Appareil (1) selon les revendications 1 à 10, **caractérisé en ce que** le moyen de mesure (10) comprend un potentiomètre (27).

12. Appareil (1) selon la revendication 10 ou selon les revendications 10 et 11, **caractérisé en ce que** le balancier comprend un premier (25) et un deuxième (26) doigts, le moyen d'actionnement (60) comprend un levier (30) mu par le deuxième doigt (26) du balancier (6) et sollicité par un moyen de rappel (32) qui maintient en contact le balancier (6) et le levier (30) pendant le mouvement d'écartement de la deuxième structure (2).

13. Appareil (1) selon la revendication 10 ou selon les revendications 10 et 11, **caractérisé en ce que** le moyen d'actionnement (60) comprend une roue dentée (57) mue par une crémaillère (58) du balancier (6) et sollicité par au moins un moyen de rappel (32) qui maintient en contact le balancier (6) et la roue dentée (57) pendant le mouvement d'écartement de la deuxième structure (2).

14. Appareil (1) selon l'une des revendications 1 à 10, **caractérisé en ce que** le moyen de mesure (10) comprend une jauge de déformation (28) ou un système (29) de détection optique à photo-détecteur.

15. Procédé de mise en oeuvre de l'appareil (1) selon l'une quelconque des revendications 1 à 14, cet appareil comprenant une première structure (2) comportant une plaque chauffante pour cuire l'aliment, **caractérisé en ce qu'**il comprend une étape d'ajustage de l'appareil (1), avant utilisation, via la sélection par un utilisateur d'une touche ou d'une combinaison de touches que comprend l'appareil (1) .

**Patentansprüche**

1. Kochgerät (1), umfassend:

- eine erste Struktur (2), aufweisend eine Heizplatte (3), um ein Lebensmittel zu kochen, und
- eine zweite Struktur (4), die in Bezug auf die erste Struktur (2) beweglich ist, um eine Beabstandungsbewegung zu erzeugen, wobei die Beabstandungsbewegung der zweiten Struktur zum Schwenken einer Welle (9) führt, die in Bezug auf die erste Struktur (2) schwenkbar ist,

**dadurch gekennzeichnet, dass** es umfasst:

eine Messvorrichtung (12), um die Stärke des derart angeordneten Lebensmittels zu messen, wobei die Messvorrichtung umfasst:

▪ einen Schwinghebel (6), der imstande ist, in dem Gerät zu schwenken, wobei der Schwinghebel ein erstes Ende (7) und ein zweites, gemäß seiner Länge gegenüberliegendes zweites Ende (8) umfasst, wobei der Schwinghebel (6) mit dem ersten Ende (7) mit der Welle (9) verbunden ist, und
  ▪ ein Messmittel (10) des Schwenkwinkels des Schwinghebels (6), um die Stärke des Lebensmittels zu messen, wobei das Messmittel mit dem Schwinghebel (6) zum zweiten Ende des Schwinghebels (6) interagiert,

wobei die Beabstandungsbewegung der zweiten Struktur in Bezug auf die erste Struktur (2) zum Schwenken des Schwinghebels (6) führt.

**2.** Gerät (1) nach Anspruch 1, **dadurch gekennzeichnet, dass** die zweite Struktur (4) eine Heizplatte (5) umfasst, die ausgebildet ist, um das gegen sie zwischen den Platten (3, 5) angeordnete Lebensmittel durch Leitung zu kochen.

**3.** Gerät (1) nach Anspruch 1, **dadurch gekennzeichnet, dass** der Schwinghebel (6) mit der schwenkbaren Welle (9) starr verbunden ist.

**4.** Gerät (1) nach Anspruch 1, **dadurch gekennzeichnet, dass** der Schwinghebel (6) auf der Welle (9) mit einem Spiel angebracht ist, das ausreichend ist, um das Schwenken des Schwinghebels (6) zu erlauben.

**5.** Gerät (1) nach Anspruch 1 oder 2, **dadurch gekennzeichnet, dass** die zweite Struktur (4) auf der Welle (9) mit Hilfe seitlicher Arme (13) angebracht ist, die in Bezug auf die erste Struktur (2) beweglich sind.

**6.** Gerät (1) nach Anspruch 5, **dadurch gekennzeichnet, dass** jeder seitliche Arm (13) ein erstes Ende (14), das mit der Welle (9) verbunden ist, und einen zweiten Abschnitt (15), der mit einer Flanke (11) der zweiten Struktur (4) ungefähr in der Mitte (16) der Flanke (11) verbunden ist, umfasst.

**7.** Gerät (1) nach Anspruch 5, **dadurch gekennzeichnet, dass** das erste Ende (7) des Schwinghebels (6) in ein erstes Ende (14) einer der seitlichen Arme (13) eingreift, wobei der Arm (13) mit der Welle (9) verbunden ist, wobei dieser Eingriff bis zu einem vorbestimmten Schwenkwinkel der Arme (13) erfolgt, über den hinaus sich der Arm (13) aus dem Schwinghebel (6) derart löst, dass die seitlichen Arme (13) danach ihr Schwenken fortführen, ohne dass sich das des Schwinghebels (6) fortführt.

**8.** Gerät (1) nach Anspruch 7, **dadurch gekennzeichnet, dass** der vorbestimmte Schwenkwinkel der Arme (13) dem vorbestimmten Schwenkwinkel (β) des Schwinghebels (6) entspricht, der zwischen 10 und 30° inklusive beträgt.

**9.** Gerät (1) nach Anspruch 7 oder 8, **dadurch gekennzeichnet, dass** der vorbestimmte Schwenkwinkel (β) des Schwinghebels (6) einem Zwischenöffnungszustand der ersten (2) und zweiten Struktur (4) entspricht, wo sie etwa parallel sind.

**10.** Gerät (1) nach einem der Ansprüche 1 bis 9, **dadurch gekennzeichnet, dass** der Schwinghebel (6) zu seinem zweiten Ende (8) mit einem Betätigungsmittel (60) verbunden ist, um das Messmittel (10) zu betätigen.

**11.** Gerät (1) nach den Ansprüchen 1 bis 10, **dadurch gekennzeichnet, dass** das Messmittel (10) ein Potentiometer (27) umfasst.

**12.** Gerät (1) nach Anspruch 10 oder nach den Ansprüchen 10 und 11, **dadurch gekennzeichnet, dass** der Schwinghebel einen ersten (25) und einen zweiten (26) Finger umfasst, wobei das Betätigungsmittel (60) einen Hebel (30) umfasst, der von dem zweiten Finger (26) des Schwinghebels (6) bewegt und von einem Rückholmittel (32) beansprucht wird, das den Schwinghebel (6) und den Hebel (30) während der Beabstandungsbewegung der zweiten Struktur (2) in Kontakt hält.

**13.** Gerät (1) nach Anspruch 10 nach den Ansprüchen 10 und 11, **dadurch gekennzeichnet, dass** das Betätigungsmittel (60) ein Zahnrad (57) umfasst, das von einer Zahnstange (58) des Schwinghebels (6) bewegt und von mindestens einem Rückholmittel (32) beansprucht wird, das den Schwinghebel (6) und das Zahnrad (57) während der Beabstandungsbewegung der zweiten Struktur (2) in Kontakt hält.

**14.** Gerät (1) nach einem der Ansprüche 1 bis 10, **dadurch gekennzeichnet, dass** das Messmittel (10) einen Verformungsfühler (28) oder ein optisches Detektionssystem (29) mit Photodetektor umfasst.

**15.** Verfahren für den Einsatz des Geräts (1) nach einem der Ansprüche 1 bis 14, wobei dieses Gerät eine erste Struktur (2) umfasst, die eine Heizplatte zum Kochen des Lebensmittels aufweist, **dadurch gekennzeichnet, dass** es vor der Benutzung mittels der Auswahl durch einen Benutzer einer Taste oder einer Tastenkombination, die das Gerät (1) umfasst, einen Einstellungsschritt des Geräts (1) umfasst.

**Claims**

**1.** A cooking appliance (1) comprising:

  - a first structure (2) including a heating plate (3) for cooking a food; and,
- a second structure (4) movable relative to the first structure (2) to produce a separation movement, wherein the separation movement of the second structure results in the pivoting of a pivotable shaft (9) relative to the first structure (2),

**characterized in that** it comprises:

a measuring device (12) for measuring the thickness of the food thus disposed, the measuring device comprising:

■ a rocker (6) able to pivot in the appliance, the rocker including a first end (7) and an opposite second end (8) along its length, the rocker (6) being connected by the first end (7) to said shaft (9) ; and,
■ a means (10) for measuring the pivoting angle of the rocker (6) to estimate the thickness of the food; the measuring means interacting with the rocker (6) toward the second end of the rocker (6)

said separation movement of the second structure relative to the first structure (2) resulting in the pivoting of the rocker (6).

2. The appliance (1) according to claim 1, **characterized in that** the second structure (4) comprises a heating plate (5) adapted to cook there against, by conduction, said food disposed between the plates (3, 5) .

3. The appliance (1) according to claim 1, **characterized in that** the rocker (6) is rigidly connected to the pivotable shaft (9).

4. The appliance (1) according to claim 1, **characterized in that** the rocker (6) is mounted on the shaft (9) with a clearance sufficient to allow the pivoting of the rocker (6).

5. The appliance (1) according to claim 1 or 2, **characterized in that** the second structure (4) is mounted on the shaft (9) by means of lateral arms (13) movable at least relative to the first structure (2).

6. The appliance (1) according to claim 5, **characterized in that** each lateral arm (13) comprises a first end (14) connected to the shaft (9) and a second portion (15) connected to a flank (11) of the second structure (4) toward the middle (16) of said flank (11).

7. The appliance (1) according to claim 5, **characterized in that** the first end (7) of the rocker (6) is engaged with a first end (14) of one of the lateral arms (13) where the arm (13) is connected to the shaft (9), this engagement operating until a predetermined pivoting angle of the arms (13) beyond which said arm (13) disengages from the rocker (6), so that the lateral arms (13) then continue their pivoting without the rocker (6) continuing to pivot.

8. The appliance (1) according to claim 7, **characterized in that** the predetermined pivoting angle of the arms (13) corresponds to the predetermined pivoting angle ($\beta$) of the rocker (6) which is comprised between 10° and 30°.

9. The appliance (1) according to claim 7 or 8, **characterized in that** the predetermined pivoting angle ($\beta$) of the rocker (6) corresponds to an intermediate open state of the first (2) and second structures (4) where said first and second structures are substantially parallel.

10. The appliance (1) according to one of claims 1 to 9, **characterized in that** the rocker (6) is connected, toward its second end (8), to an actuating means (60) for actuating the measuring means (10).

11. The appliance (1) according to claims 1 to 10, **characterized in that** the measuring means (10) comprises a potentiometer (27).

12. The appliance (1) according to claim 10 or according to claims 10 and 11, **characterized in that** the rocker comprises first (25) and second (26) fingers, the actuating means (60) comprises a lever (30) driven by the second finger (26) of the rocker (6) and biased by a biasing means (32) which holds the rocker (6) and the lever (30) in contact during the separation movement of the second structure (2).

13. The appliance (1) according to claim 10 or according to claims 10 and 11, **characterized in that** the actuating means (60) comprises a toothed wheel (57) driven by a rack (58) of the rocker (6) and biased by at least one biasing means (32) which holds the rocker (6) and the toothed wheel (57) in contact during the separation movement of the second structure (2).

14. The appliance (1) according to one of claims 1 to 10, **characterized in that** the measuring means (10) comprises one of a strain gauge (28) or an optical detection system (29) with a photodetector.

15. A method for implementing the appliance (1) according to any one of claims 1 to 14, said appliance comprising a first structure (2) including a heating plate for cooking the food, **characterized in that** the method comprises a step of adjusting the appliance (1), before use, through the selection by the user of a key or a combination of keys that the appliance (1) comprises.

**Fig. 1**

**Fig. 2**

**Fig. 3**

EP 2 861 110 B1

Fig. 4

Fig. 5

Fig. 6

11

**Fig. 7**

**Fig. 8**

**Fig. 9**

**Fig. 10A**

**Fig. 10B**

**Fig. 11**

**Fig. 12**

**Fig. 13**

**Fig. 14**

Fig. 15

Fig. 16

Fig. 17

Fig. 18

Fig. 19

**EP 2 861 110 B1**

**Documents brevets cités dans la description**

*   DE 4302190